# EUROPÄISCHE PATENTSCHRIFT

(11) **EP 1 458 813 B1**
(45) Veröffentlichungstag und Bekanntmachung des Hinweises auf die Patenterteilung: **26.03.2008**
(21) Anmeldenummer: 02791793.9
(22) Anmeldetag: 09.12.2002
(51) Int. Cl.: C08L 69/00, C08K 5/521

(54) **EXTRUDIERBARE POLYCARBONAT-FORMMASSEN**
EXTRUDABLE POLYCARBONATE MOLDING MATERIALS
MATIERES A MOULER EXTRUDABLES A BASE DE POLYCARBONATE

(30) Priorität: 20.12.2001 DE 10162747
(43) Veröffentlichungstag der Anmeldung: 22.09.2004
(73) Patentinhaber: Bayer MaterialScience AG, 51368 Leverkusen (DE)
(72) Erfinder: SEIDEL, Andreas, 41542 Dormagen (DE); KIRCHER, Klaus, 51375 Leverkusen (DE); ECKEL, Thomas, 41540 Dormagen (DE); WITTMANN, Dieter, 51375 Leverkusen (DE)
(86) Internationale Anmeldenummer: PCT/EP2002/013906
(87) Internationale Veröffentlichungsnummer: WO 2003/054085

(56) Entgegenhaltungen:
- WO-A-00/26287
- US-A- 5 087 663
- US-A- 5 449 710
- US-A- 5 672 645
- US-A- 6 133 360
- DATABASE WPI Section Ch, Week 199637 Derwent Publications Ltd., London, GB; Class A23, AN 1996-368416 XP002237143 -& JP 08 176425 A (IDEMITSU PETROCHEM CO), 9. Juli 1996 (1996-07-09)
- DATABASE WPI Section Ch, Week 200007 Derwent Publications Ltd., London, GB; Class A23, AN 2000-075770 XP002237144 -& JP 11 323118 A (TEIJIN KASEI LTD), 26. November 1999 (1999-11-26)

## Beschreibung

Die Erfindung betrifft schlagzähmodifizierte Polycarbonat-Zusammensetzungen mit hoher Schmelzestabilität, die sich durch ein verbessertes mechanisches Eigenschaftsprofil auszeichnen. Insbesondere besitzen die Zusammensetzungen eine verbesserte Spannungsrissbeständigkeit unter Chemikalieneinfluss und eine höhere Kerbschlagzähigkeit bei vergleichbarer Schmelzerheologie (MVR) der Formmassen. Die Zusammensetzungen enthalten eine Mischung aus linearem und verzweigtem Polycarbonat sowie eine Phosphorverbindung. Die Zusammensetzungen eignen sich hervorragend insbesondere zur Herstellung von Profilen, Folien oder Platten jeglicher Art im Extrusionsverfahren. Aus den Zusammensetzungen hergestellte Platten lassen sich im Tiefziehverfahren zu Formteilen jeglicher Art verarbeiten. Insbesondere betrifft die Erfindung auch flammwidrige Zusammensetzungen, vor allen Dingen solche, bei denen die Phosphorverbindung selbst das Flammschutzmittel darstellt.

Die in WO 99/57198 beschriebenen Formmassen enthalten aromatische Polycarbonate, kautschukmodifizierte Pfropfcopolymere, Phosphor enthaltende Flammschutzmittel mit der Maßgabe, dass der Fluorgehalt der Mischung 0,1 Gew.-% nicht übersteigt. Es wird allgemein erwähnt, dass sowohl lineare als auch verzweigte aromatische Polycarbonate eingesetzt werden können, Mengenverhältnisse werden nicht genannt.

In DE-A 3 149 812 werden thermoplastische Formmassen mit verbesserter Verarbeitbarkeit beschrieben, die verzweigte Polycarbonate sowie Pfropfpolymerisate des Typs ABS, AES und ASA enthalten. Spezielle Flammschutzmittel werden nicht erwähnt.

EP-B 496 258 beschreibt Zusammensetzungen, die mit einem speziellen Verzweigungsmittel verzweigtes Polycarbonat und weitere Polymerkomponenten wie beispielsweise Styrolharze, Polyamid, Polyolefine und kautschukartige Elastomere enthalten. Spezielle Flammschutzmittel werden nicht erwähnt. EP-B 496 258 hat das Ziel Polycarbonat-Zusammensetzungen mit guter Schmelzeßießfähigkeit, Lösungsmittelbeständigkeit, und Zähigkeit bereitzustellen.

US-A 5,087,663 und US-A 5,068,285 beschreiben verzweigte Polycarbonate bzw. deren Mischung mit linearen Polycarbonaten in Mischung mit ABS bzw. ASA-Polymeren und MBS-Polymeren, die ein gutes Blasform- oder Thermoformverhalten aufweisen. Spezielle Flammschutzmittel werden nicht erwähnt.

EP-A 625 547 beschreibt flammgeschützte Polycarbonat-Zusammensetzungen auf Basis von Mischungen aus linearem und verzweigtem Polycarbonat, die spezielle Metallsalze und Polyorganosiloxane enthalten.

Aufgabe der vorliegenden Erfindung ist die Bereitstellung schlagzähmodifizierter Polycarbonatformmassen, die sich durch ein verbessertes ESC-Verhalten sowie eine verbesserte Kerbschlagzähigkeit auszeichnen und sich aufgrund ihrer hohen Schmelzestabilität für die Verarbeitung im Extrusionsverfahren eignen.

Es wurde gefunden, dass durch Zusatz begrenzter Mengen linearen Polycarbonats zu Phosphorverbindungen enthaltenden PC/ABS-Formmassen auf Basis von verzweigtem Polycarbonat sich eine Verbesserung der Kerbschlagzähigkeit und des ESC-Verhaltens bei äquivalenter Schmelzestabilität (gemessen an einem vergleichbaren MVR) erzielen lässt. Die Schmelzestabilität bleibt durch den Zusatz des linearen Polycarbonats weitestgehend unverändert hoch, obwohl aufgrund des Zusatzes des unverzweigten Polycarbonat eine Verringerung der Schmelzestabilität zu erwarten war.

Gegenstand der vorliegenden Erfindung sind Zusammensetzungen nach Anspruch 1 enthaltend Polycarbonat und/oder Polyestercarbonat A) und mindestens eine Phosphorverbindung (IV) B), dadurch gekennzeichnet, dass die Komponente A) eine Mischung aus 95 bis 70 Gew.%, ganz besonders bevorzugt 90 bis 80 Gew.-% verzweigtem Polycarbonat und/oder Polyestercarbonat A.1) und 5 bis 30, ganz besonders bevorzugt 10 bis 20 Gew.-% (jeweils bezogen auf Komponente A) linearem Polycarbonat und/oder Polyestercarbonat A.2) ist.

Die Zusammensetzungen enthalten zusätzlich kautschukmodifizierte Vinyl(Co)polymere C).

Besonders bevorzugte Zusammensetzungen enthalten
50 bis 99, insbesondere 60 bis 95 Gew.-Teile Komponente A)
0,05 bis 20 Gew.-Teile, besonders bevorzugt 0,1 bis 15 Gew.-Teile, höchst bevorzugt 2 bis 15 Gew.-Teile mindestens einer Phosphorverbindung B,
0,5 bis 50, insbesondere 1 bis 30 Gew.-Teile, besonders bevorzugt 2 bis 25 Gew.-Teile, ganz besonders bevorzugt 3 bis 15 Gew.-Teile kautschukmodifiziertes Vinyl(Co)polymer C).

Die Gewichtsteil-Angaben in dieser Anmeldung sind so normiert, dass die Summe der Gewichtsteile aller Komponenten, d.h. der Komponenten A), B), C) und gegebenenfalls weiterer Zusatzstoffe, wie sie im Folgenden als Komponente D) und E) beschrieben sind, in der Zusammensetzung 100 ergibt.

### Komponente A

Erfindungsgemäß geeignete lineare und verzweigte aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z.B. DE-A 3 077 934).

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und im Falle der verzweigten Polycarbonate unter Verwendung von trifunktionellen oder mehr als trifunktionellen Verzweigern, beispielsweise Triphenolen oder Tetraphenolen, oder auch Verzweigern mit abgestufter Reaktivität wie beispielsweise Isatinbiscresol. Polycarbonate lassen sich auch nach dem bekannten Schmelzeverfahren herstellen.

Diphenole zur Herstellung der linearen und verzweigten aromatischen Polycarbonate und/oder aromatischen Polyestercarbonate sind vorzugsweise solche der Formel (I) 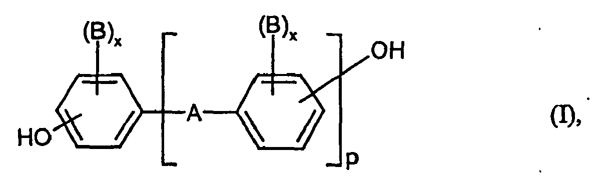 wobei
- A: eine Einfachbindung, C₁ bis C₅-Alkylen, C₂ bis C₅ Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 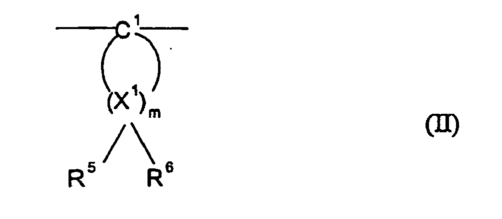 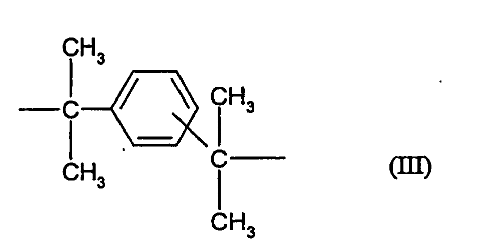
- B: jeweils C₁ bis C₁₂ -Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Akyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxypluenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydxoxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen verzweigten und linearen Polycarbonate geeignete Kettenabbrecher sind beispielsweise Phenol, p-Chlorphenol, p-tert-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%, und 10 mol-%, bezogen auf die Molsumme der jeweils eingesetzten Diphenole.

Die relative Lösungsviskosität (ηᵣₑₗ) der aromatischen linearen Polycarbonate und Polyestercarbonate liegt im Bereich 1,18 bis 1,40, vorzugsweise 1,24 bis 1,35, insbesondere 1,28 bis 1,34 (gemessen an Lösungen von 0,5 g Polycarbonat oder Polyestercarbonat in 100 ml Methylenchlorid-Lösung bei 25°C).

Die relative Lösungsviskosität (ηᵣₑₗ) der aromatischen verzweigten Polycarbonate und Polyestercarbonate liegt im Bereich 1,18 bis 1,40, vorzugsweise 1,24 bis 1,35, insbesondere 1,28 bis 1,34 (gemessen an Lösungen von 0,5 g Polycarbonat oder Polyestercarbonat in 100 ml Methylenchlorid-Lösung bei 25°C).

Die thermoplastischen, aromatischen verzweigten Polycarbonate werden in bekannter Weise erhalten durch den Einbau von 0,01 bis 2 mol-%, bevorzugt 0,05 bis 1 mol.-%, insbesonders 0,1 bis 0,5 mol-%, bezogen auf die Summe der eingesetzten Diphenole, an dreifunktionellen oder mehr als dreifunktionellen Verbindungen, beispielsweise solchen mit drei und mehr phenolischen Gruppen.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetra-chlorid oder Pyromellithsäuretetrachlorid oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra (4-[4-hydroxyphenyl-isopropyl]-phenoxy)-methan, 1,4-Bis[4,4'-dihydroxytri-phenyl)-methyl]-benzol verwendet werden. Phenolische Verzweigungsmittel können mit den Diphenolen vorgelegt, Säurechlorid-Verzweigungsmittel können zusammen mit den Säuredichloriden eingetragen werden.

Als Verzweiger kommen bevorzugt auch solche drei- oder mehr als dreifunktionellen Verbindungen in Frage, deren funktionelle Gruppen eine abgestufte Reaktivität aufweisen.

Hierbei handelt es sich beispielsweise um Verbindungen, die sowohl phenolische Hydroxylgruppen als auch aromatische oder aliphatische N-H-Funktionalitäten enthalten, welche über Amidbindungen eine Verzweigung erlauben.. Bevorzugtes Beispiel für eine solche Verbindung ist das Isatinbiscresol.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxyaryloxy-Endgruppen eingesetzt werden. Diese sind bekannt (beispielsweise US 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt bzw. besonders bevorzugt genannten Diphenolen.

Aromatische .Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

### Komponente B

Die Zusammensetzungen enthalten des weiteren mindestens eine Phosphorverbindung. Phorsphorverbindungen können in Polycarbonat-Zusammensetzungen verschiedene Funktionen wahrnehmen. Beispielhaft seien genannt P-basierende Flammschutzadditive und P-basierende Stabilisatoren. Beispiele für phosphorhaltige Verbindungen sind oligomere und monomere Phosphor- und Phosphonsäureester, Phosphonatamine, anorganische Phosphate, P-Oxide, Phosphite und Phosphazene, wobei auch Mischungen von zwei oder mehr der genannten Komponenten zum Einsatz kommen können.

In den erfindungsgemäßen Zusammensetzungen kommen Phosphor- bzw. Phosphonsäureester der allgemeinen Formel (IV) 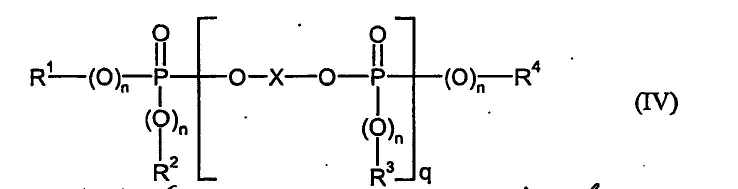 als Flammschutz (FR)-Additiv zum Einsatz,
worin
- R¹, R², R³ und R⁴,: unabhängig voneinander gegebenenfalls halogeniertes C₁ bis C₈-Alkyl, jeweils gegebenenfalls durch Alkyl, vorzugsweise C₁ bis C₄ Alkyl und/oder Halogen, vorzugsweise Chlor, Brom, substituiertes C₅ bis C₆-Cycloalkyl, C₆ bis C₂₀-Aryl oder C₇ bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Alkylgruppen, vorzugsweise C₁ bis C₄-Alkyl und/oder Halogen substituiert sein. Besonders bevorzugte Aryl-Reste sind Kresyl, Phenyl, Xylenyl, Propylphenyl oder Butylphenyl sowie die entsprechenden chlorierten oder bromierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30, vorzugsweise 0,5 bis 15, besonders bevorzugt 0,8 bis 5, insbesondere 0,9 bis 3, ganz besonders bevorzugt von 0,9 bis 1,7.
- X: steht besonders bevorzugt für 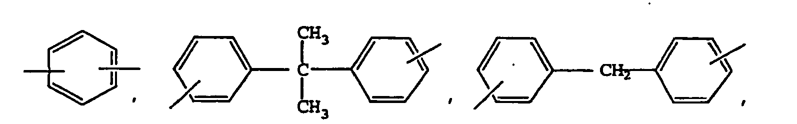 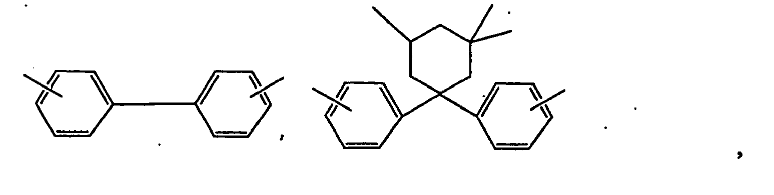 insbesondere leitet sich X von Resorcin, Hydrochinon, Bisphenol A oder Diphenylphenol ab. Besonders bevorzugt leitet sich X von Bisphenol A ab.

Weitere bevorzugte phosphorhaltige Verbindungen sind Verbindungen der Formel (IVa) 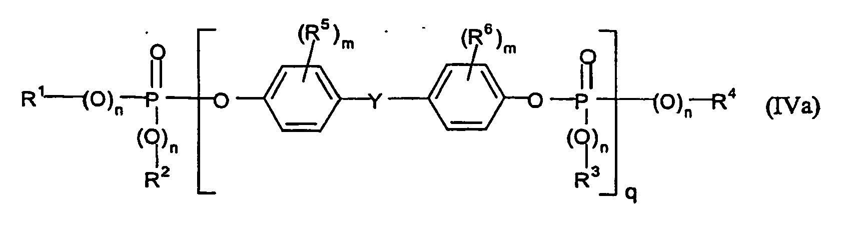 wobei
- R¹, R², R³, R⁴, n und q: die bei der Formel (IV) angegebene Bedeutung haben,
- m: unabhängig voneinander 0, 1, 2, 3 oder 4,
- R⁵ und R⁶: unabhängig voneinander C₁ bis C₄-Alkyl, vorzugsweise Methyl oder Ethyl und
- Y: C₁ bis C₇-Alkyliden, C₁-C₇-Alkylen, C₅ bis C₁₂-Cycloalkylen, C₅ bis C₁₂-Cycloalkyliden, -O-, -S-, -SO₂ oder -CO-, vorzugsweise Isopropyliden oder Methylen, bedeuten.

Bevorzugt kommen auch Mischungen mehrerer Komponenten gemäß Formel (IV) und (IVa) zum Einsatz, wobei sich diese sowohl in ihrer chemischen Struktur als auch im Oligomerisationsgrad q unterscheiden können. Mischungen von phosphorhaltigen Verbindungen weisen mittlere q-Werte (zahlengemittelt) auf. Auch herstellungsbedingt können die phosphorhaltigen Verbindungen in Form von Mischungen anfallen, deren q-Wert dann einen gemittelten Wert ergibt.

Die mittleren q-Werte von Mischungen von Phosphorverbindungen gemäß Formeln (IV) und (IVa) können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Als erfindungsgemäße Komponente B können auch Monophosphate (q=O), gegebenenfalls in Mischung mit anderen Verbindungen eingesetzt werden.

Die Phosphorverbindungen gemäß Komponente B sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979;. Houben-Weyl, Methoden der organischen Chemie, Bd. 12/1, S. 43; Beilstein Bd. 6, S. 177).

### Komponente C

Die erfindungsgemäBen Formmassen enthalten weiterhin eine Komponente C, welche Pfropfpolymerisate C1 von mindestens einem Vinylmonomeren auf mindestens einen Kautschuk mit einer Glasübergangstemperatur < 10°C als Pfropfgrundlage umfasst.

Bevorzugte Pfropfpolymerisate C1 sind ein oder mehrere Pfropfpolymerisate von
5 bis 95 Gew.-% , vorzugsweise 20 bis 90 Gew.%, einer Mischung aus
1. 50 bis 99 Gew.-%, insbesondere 50 bis 90, noch bevorzugter 55 bis 85, ganz besonders bevorzugt 60 bis 80 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
2. 1 bis 50 Gew.-%, insbesondere 10 bis 50, noch bevorzugter 15 bis 45, ganz besonders bevorzugt 20 bis 40 Gew.-% Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid) auf
95 bis 5, vorzugsweise 80 bis 10 Gew.-% einer oder mehrerer Kautschuke mit Glasübergangstemperaturen <10°C, vorzugsweise <0°C, besonders bevorzugt < -20°C als Pfropfgrundlage.

Die Pfropfgrundlage hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugte Monomere der Gruppe 1 sind ausgewählt aus mindestens einem der Monomere Styrol, α-Methylstyrol und Methylmethacrylat, bevorzugte Monomere der Gruppe 2 sind ausgewählt aus mindestens einem der Monomere Acrylnitril, Maleinsäureanhydrid und Methylmethacrylat.

Besonders bevorzugte Monomere sind Styrol aus Gruppe 1 und Acrylnitril aus Gruppe 2.

Für die Pfropfpolymerisate C1 geeignete Pfropfgrundlagen sind beispielsweise Dienkautschuke, EP(D)M-Kautschuke, also solche auf Basis Ethylen/Propylen und gegebenenfalls Dien, weiterhin Acrylat-, Polyurethan-, Silikon-, Chloropren und Ethylen/inylacetat-Kautschuke sowie Kompositkautschuke, bestehend aus zwei oder mehr der zuvor genannten Systeme.

Bevorzugte Pfropfgrundlagen sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß oben aufgeführter Gruppen 1 und 2), wie beispielsweise Butadien/Styrol-Copolymerisate, mit der Maßgabe, dass die Glasübergangstemperatur der Pfropfgrundlage <10°C, vorzugsweise <0°C, besonders bevorzugt <-10°C liegt.

Besonders bevorzugt ist reiner Polybutadienkautschuk.

Besonders bevorzugte Pfropfpolymerisate C1 sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage beträgt mindestens 30 Gew.-%, vorzugsweise mindestens 40 Gew.-%.

Der Gelgehalt der Pfropfgrundlage wird bei 25°C in Toluol bestimmt (M. Hoffmann, H. Krömer, R. Kuhn, Polymeranalytik I und II, Georg Thieme-Verlag, Stuttgart 1977).

Die Pfropfcopolymerisate C1 werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-mitiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisat auch solche Produkte verstanden, die durch (Co)Polymerisation der Pfropfmonomere in Gegenwart der Pfropfgrundlage gewonnen werden und bei der Aufarbeitung mit anfallen.

Als Pfropfgrundlage geeignete Acrylatkautschuke sind vorzugsweise Polymerisate aus Acrylsäurealkylestern, gegebenenfalls auch Copolymerisate mit bis zu 40 Gew.-%, bezogen auf die Pfropfgrundlage anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage.

Bei cyclischen vernetzenden Monomeren mit mindestens drei ethylenisch ungesättigten Gruppen ist es vorteilhaft, die Menge auf unter 1 Gew.-% der Pfropfgrundlage zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den DE-A 3 704 657, DE-A 3 704 655, DE-A 3 631 540 und DE-A 3 631 539 beschrieben werden.

Komponente C kann weiterhin ein oder mehrere thermoplastische Vinyl(Co)Polymerisate C2 enthalten, in der die o.g. Pfropfpolymerisate C1 in der erfindungsgemäßen Zusammensetzung bevorzugt dispergiert vorliegen.

Geeignet sind als Vinyl(Co)Polymerisate C2 Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren. Insbesondere geeignet sind (Co)Polymerisate aus
50 bis 99, vorzugsweise 60 bis 80 Gew.-% Vinylaromaten und/oder kernsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und
1 bis 50, vorzugsweise 20 bis 40 Gew.-% Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C2 sind harzartig und thermoplastisch.

Besonders bevorzugt ist das Copolymerisat aus Styrol und Acrylnitril.

Die (Co)Polymerisate gemäß C2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000.

### Komponente D

Werden als Komponente B) P-basierende FR-Additive eingesetzt, so werden diese oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente C1) oder mit einer Emulsion eines Copolymerisats, vorzugsweise auf Styrol/Acryinitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente C1) oder einem Copolymerisat (Komponente C2), vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 80 Gew.-%.

Die fluorierten Polyolefine kommen in Konzentration von 0 bis 1 Gew.-Teilen, bevorzugt von 0,1 bis 0,5 Gew.-Teilen zum Einsatz, wobei die Gewichtsteile aller Komponenten auf 100 normiert werden. Die angegebene Menge fluoriertes Polyolefin bezieht sich auf das fluorierte Polyolefin per se und schließt nicht die Menge an zusätzlichen Komponenten im Falle der Verwendung der fluorierten Polyolefine in Form einer koagulierten Mischung als Präcompound oder Masterbatch ein.

### Komponente E (Weitere Zusätze)

Die erfindungsgemäßen Zusammensetzungen können weiterhin bis zu 20 Gew.-Teile, bevorzugt 0,1 bis 10 Gew.-Teile, wenigstens eines üblichen Polymeradditivs wie ein Gleit- und Entformungsmittel, beispielsweise Pentaerythrittetrastearat oder Polyolefin, ein Nukleiermittel, ein Antistatikum, einen Stabilisator, ein P-freies FR-Additiv, ein FR-Synergist, z.B. ein nanoskaliges anorganisches Material, oder ein Füll- und Verstärkungsstoff, z.B. Glas- oder Kohlefasern oder ein Mineral wie Talk, Mica, Kaolin oder Wollastonit sowie Farbstoff und Pigment enthalten.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formteilen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formteile sind Folien, Profile, Gehäuseteile jeder Art, z.B. für Haushaltsgeräte wie Saftpressen, Kaffeemaschinen, Mixer, für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:

Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Karosserieteile für KFZ, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

In besonders bevorzugter Weise dienen die Zusammensetzungen zur Herstellung von Profilen, Kanälen, Rohren, Platten, welche im Tiefziehverfahren zu Formteilen weiterverarbeitet werden können, und Folien im Extrusionsverfahren.

Die folgenden Beispiele dienen der weiteren Erläuterung der Erfindung.

### Beispiele

Die in der Tabelle 1 angegebenen und nachfolgend kurz erläuterten Komponenten werden auf einer ZSK-25 bei 260°C schmelzcompoundiert. Die Prüfkörper werden auf einer Spritzgießmaschine Typ Arburg 270 E bei 260°C hergestellt.

### Komponenten

### Komponente A1

Verzweigtes Polycarbonat auf Basis Bisphenol A mit einer relativen Lösungsviskosität von ηᵣₑₗ = 1,31, gemessen in CH₂Cl₂ als Lösungsmittel bei 25°C und einer Konzentration von 0,5 g/100 ml, welches durch Einsatz von 0,3 mol-% Isatinbiscresol bezogen auf die Summe aus Bisphenol A und Isatinbiscresol verzweigt wurde.

### Komponente A2

Lineares Polycarbonat aus Basis Bisphenol A mit einer relativen Lösungsviskosität von ηᵣₑₗ = 1,31, gemessen in CH₂Cl₂ als Lösungsmittel bei 25°C und einer Konzentration von 0,5 g/100 ml.

### Komponente B

Bisphenol-A-basierendes Oligophosphat

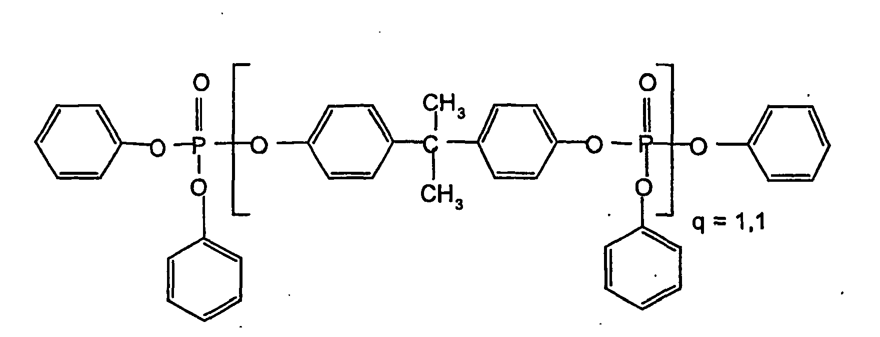

Zur Bestimmung des angegebenen zahlengemittelten q-Wertes werden zuerst die Anteile der oligomeren Phosphate durch HPLC-Messungen bestimmt:

| | |
|---|---|
| Säulentyp: | LiChrosorp RP-8 |
| Elutionsmittel im Gradienten: | Acetonitril/Wasser 50:50 bis 100:0 |
| Konzentration: | 5 mg/ml |

Aus den Anteilen der einzelnen Komponenten (Mono- und Oligophosphate) werden dann nach bekannten Verfahren die zahlengewichteten q-Mittelwerte berechnet.

### Komponente C

Emulsionspolymerisat hergestellt durch Pfropfung von 40 Gew.-Teilen einer Mischung aus Styrol und Acrylnitril im Verhältnis von 73:27 auf 60 Gew.-Teile teilchenförmigen vernetzten Polybutadienkautschuks (mittlerer Teilchendurchmesser d₅₀ = 0,3 µm).

### Komponente D

Tetrafluorethylenpolymerisat (PTFE) als koagulierte Mischung aus einer Pfropfpolymerisat-Emulsion gemäß oben genannter Komponente C in Wasser und einer Tetrafluorethylenpolymerisat-Emulsion in Wasser. Das Gewichtsverhältnis Pfropfpolymerisat C zum Tetrafluorethylenpolymerisat in D ist 90 Gew.-% zu 10 Gew.%. Die Tetrafluorethylenpolymerisat-Emulsion besitzt einen Feststoffgehalt von 60 Gew.-%. Die Pfropfpolymerisat-Emulsion besitzt einen Feststoffgehalt von 34 Gew.%.

Die Emulsion des Tetrafluorethylenpolymerisats (Teflon® 30 N) wird mit der Emulsion des Pfropfpolymerisats vermischt und mit 1,8 Gew.%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente E1

Phosphitstabilisator

### Komponente E2

Pentaerithrithtetrastearat (PETS) als Entformungs- bzw. Gleitmittel.

### Komponente E3

Titandioxid als Weißpigment.

### Prüfung der erfindungsgemäßen Formmassen

Die Bestimmung der Wärmeformbeständigkeit nach Vicat B erfolgt gemäß DIN 53 460 (ISO 306) an Stäben der Abmessung 80 mm x 10 mm x 4 mm.

Die Bestimmung der Kerbschlagzähigkeit aₖ wird gemäß ISO 180/1 A bei Raumtemperatur durchgeführt

Das Brandverhalten der Proben wird nach UL 94 V an Stäben der Dicken 1,6 mm gemessen.

Das Spannungsrissverhalten (ESC-Verhalten) wird an Stäben der Abmessung 80 mm x 10 mm x 4 mm untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung in Prozent) und bei Raumtemperatur im Testmedium gelagert. Das Spannungsrissverhalten wird über die Rissbildung bzw. den Bruch in Abhängigkeit von der Vordehnung (εₓ) im Testmedium beurteilt.

Der MVR (Melt Volume Rate) wird gemäß ISO 1133 bei 260°C unter Verwendung einer Stempellast von 5 kg bestimmt.

Eine Zusammenstellung der Eigenschaften der erfindungsgemäßen Zusammensetzung oder der daraus erhaltenen Formkörper ist in der Tabelle 1 wiedergegeben.

**Tabelle 1: Zusammensetzungen und ihre Eigenschaften**

| Beispiele | V1 Vergleich | V2 Vergleich | 1 | 2 | 3 | 4 Vergleich |
|---|---|---|---|---|---|---|
| Komponenten | | | | | | |
| [Gew.-Teile] | | | | | | |
| A1 | 81,48 | - | 73,33 | 65,19 | 57,04 | 40,74 |
| A2 | - | 81,48 | 8,15 | 16,30 | 24,44 | 40,74 |
| B | 9,70 | 9,70 | 9,70 | 9,70 | 9,70 | 9,70 |
| Emulsionspolymerisat aus C und D | 4,49 | 4,49 | 4,49 | 4,49 | 4,49 | 4,49 |
| PTFE aus D | 0,13 | 0,13 | 0,13 | 0,13 | 0,13 | 0,13 |
| E1 | 0,10 | 0,10 | 0,10 | 0,10 | 0,10 | 0,10 |
| E2 | 0,19 | 0,19 | 0,19 | 0,19 | 0,19 | 0,19 |
| E3 | 3,91 | 3,91 | 3,91 | 3,91 | 3,91 | 3,91 |

| Eigenschaften | | | | | | |
|---|---|---|---|---|---|---|
| aₖ (23°C) | 44 | 54 | 44 | 45 | 47 | 48 |
| [kJ/m²] | | | | | | |
| Vicat B120 | 114 | 115 | 115 | 115 | 115 | 114 |
| [°C] | | | | | | |
| MVR 260°C/5 kg | 12,9 | 16,7 | 12,8 | 13,0 | 13,6 | 14,8 |
| [ccm/10 min] | | | | | | |
| UL 94 V 1,6 mm | V0 | V0 | V0 | V0 | V0 | V0 |

| ESC-Verhalten | | | | | | |
|---|---|---|---|---|---|---|
| Bruch innerhalb von 5 min | | | | | | |
| bei εₓ | 1,0 % | 1,4 % | 1,2 % | 1,2 % | 1,2 % | 1,2 % |

Aus der Tabelle 1 geht hervor, dass Zusammensetzungen gemäß der vorliegenden Erfindung bei vergleichbarer Schmelzestabilität (MVR) bessere Spannungsrissbeständigkeit und Kerbschlagzähigkeit aufweisen als Vergleichsbeispiel 1 mit ausschließlich verzweigtem Polycarbonat. Weiterhin geht aus Tabelle 1 hervor, dass trotz des Zusatzes begrenzter Mengen an linearem Polycarbonat zu Formmassen mit verzweigtem Polycarbonat, die Schmelzestabilität hoch bleibt (niedriger MVR-Wert).

## Patentansprüche

1. Zusammensetzungen bestehend aus
A) 50 bis 99 Gew.-Teile Polycarbonat und/oder Polyestercarbonat,
B) 0,05 bis 20 Gew.-Teile mindestens einer Phosphorverbindung ausgewählt aus Phosphor- bzw. Phosphonsäureester der Formel (IV) 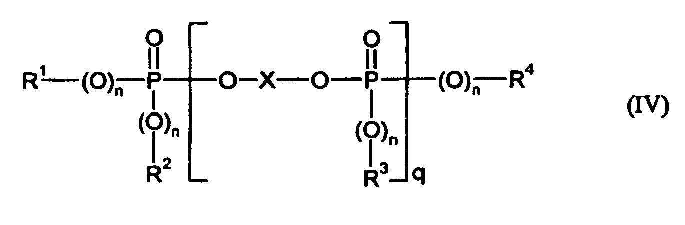 worin
R¹, R², R³ und R⁴, unabhängig voneinander gegebenenfalls halogeniertes C₁ bis C₈-Alkyl, jeweils gegebenenfalls durch Alkyl, und/oder Halogen substituiertes C₅ bis C₆-Cycloalkyl, C₆ bis C₂₀-Aryl oder C₇ bis C₁₂-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten;
C) 0,5 bis 50 Gew.-Teile Pfropfpolymerisate C1 und gegebenenfalls thermoplastische Vinyl(Co)Polymerisate C2, die in den Pfropfpolymerisaten C1 dispergiert vorliegen,
wobei die Pfropfpolymerisate C 1 ein oder mehrere Pfropfpolymerisate von 5 bis 95 Gew.-% einer Mischung aus
1. 50 bis 99 Gew.-% Vinylaromaten und/oder kernsubstituierten Vinylaromaten und
2. 1 bis 50 Gew.-% Vinylcyanide und/oder Derivate wie Anhydride und Imide ungesättigter Carbonsäuren auf
95 bis 5 einer oder mehrerer Kautschuke mit Glasübergangstemperaturen <10°C als Pfropfgrundlage
sind,
D) 0 bis 1 Gew.-Teil fluoriertes Polyolefin,
E) 0 bis 20 Gew.-Teile mindestens eines Additivs ausgewählt aus der Gruppe der Gleit- und Entformungsmittel, Nukleiermittel, Antistatika, Stabilisatoren, phosphorfreie Flammschutzmittel bzw. Flammschutzsynergisten, Füll- und Verstärkungsstoffe, Farbstoffe und Pigmente,
wobei Komponente A) eine Mischung aus 95 bis 70 Gew.-% verzweigtem Polycarbonat und/oder Polyestercarbonat A.1) und 5 bis 30 Gew.-% (jeweils bezogen auf Komponente A)) linearem Polycarbonat und/oder Polyestercarbonat A.2) ist und
wobei die Summe der Gewichtsteile der Komponenten A) bis C) und gegebenenfalls weiterer Zusatzstoffe D) und E) 100 ergibt.

2. Zusammensetzungen gemäß Anspruch 1 enthaltend 50 bis 99 Gew.-Teile A), 0,05 bis 20 Gew.-Teile B) C).

3. Zusammensetzungen gemäß Anspruch 2 enthaltend 60 bis 95 Gew.-Teile A), 0,1 bis 15 Gew.-Teile B) und 1 bis 30 Gew--Teile C).

4. Zusammensetzungen gemäß einem der vorhergehenden Ansprüche, wobei X für 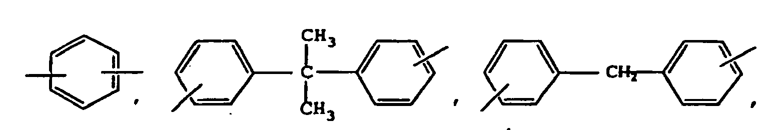 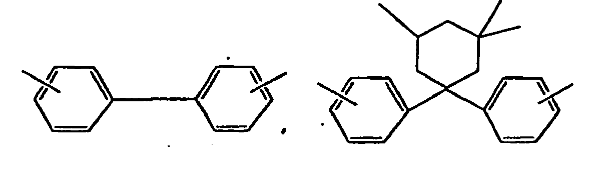 steht.

5. Zusammensetzungen gemäß Anspruch 4, wobei q für ein Zahl von 0,5 bis 15 steht

6. Zusammensetzungen gemäß Anspruch 5, wobei q für eine Zahl von 0,8 bis 5 steht

7. Zusammensetzungen gemäß Anspruch 1, wobei Komponente B) eine Phosphorverbindung der Formel (IVa) ist 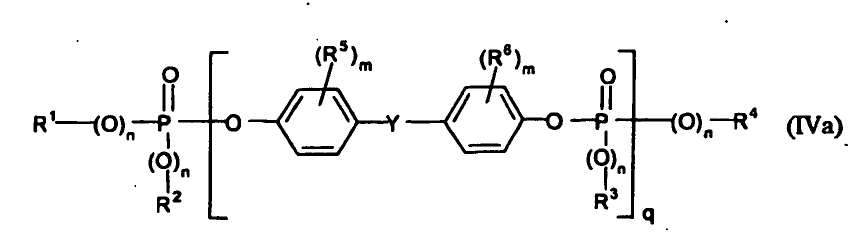 wobei
R¹, R², R³, R⁴, n und q die in Anspruch 1 angegebene Bedeutung haben,
m unabhängig voneinander 0, 1, 2, 3 oder 4,
R⁵ und R⁶ unabhängig voneinander C₁ bis C₄-Alkyl, und
Y C₁ bis C₇-Alkyliden, C₁-C₇-Alkylen, C₅ bis C₁₂-Cycloalkylen, C₅ bis C₁₂-Cycloalkyliden, -O-, -S-, -SO₂ oder -CO- bedeuten.

8. Zusammensetzungen gemäß Anspruch 1, wobei die Pfropfgrundlage ein Dien-, EP(D)M-, Acrylat- oder Silikonkautschuk oder ein aus zwei oder mehreren dieser Komponenten zusammengesetzter Kompositkautschuk ist.

9. Zusammensetzungen gemäß Anspruch 8, wobei die Pfropfgrundlage ausgewählt ist aus Polybutadien, Butadien/Styrol-Copolymerisaten und Acrylatkautschuken.

10. Verwendung der Zusammensetzungen nach einem oder mehreren der vorhergehenden Ansprüche zur Herstellung von Formteilen.

11. Formteile oder Formkörper erhältlich aus Zusammensetzungen gemäß einem oder mehreren der Ansprüche 1 bis 9.

12. Extrusionsprofile und extrudierte Platten erhältlich aus Zusammensetzungen gemäß einem oder mehreren der Ansprüche 1 bis 9.

## Claims

1. Compositions consisting of
A) 50 to 99 parts by weight of polycarbonate and/or polyester carbonate,
B) 0.05 to 20 parts by weight of at least one phosphorus compound selected from phosphoric acid and/or phosphonic acid esters of the Formula (IV) 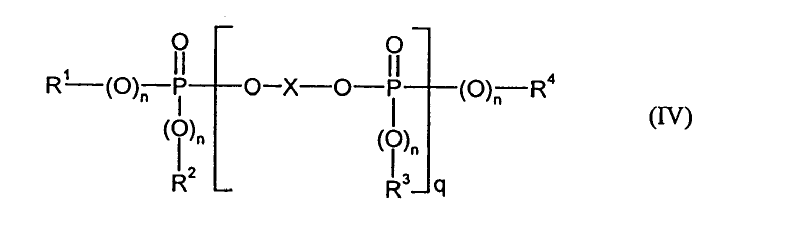 wherein
R¹, R², R³ and R⁴ independently of one another denote optionally halogenated C₁ to C₈ alkyl, or C₅ to C₆ cycloalkyl, C₆ to C₂₀ aryl or C₇ to C₁₂ aralkyl in each case optionally substituted by alkyl and/or halogen,
n independently of one another denotes 0 or 1,
q is 0 to 30, and
X denotes a mononuclear or polynuclear aromatic radical with 6 to 30 C atoms, or a linear or branched aliphatic radical with 2 to 30 C atoms, which can be OH-substituted and can contain up to eight ether bonds,
C) 0.5 to 50 parts by weight of graft polymers C1 and optionally thermoplastic vinyl (co)polymers C2, which are present dispersed in the graft polymers C1, wherein the graft polymers C1 are one or more graft polymers of 5 to 95 wt.% of a mixture of
1. 50 to 99 wt.% of vinyl aromatic compounds and/or nuclear-substituted vinyl aromatic compounds, and
2. 1 to 50 wt.% of vinyl cyanides and/or derivatives such as anhydrides and imides of unsaturated carboxylic acids on
95 to 5 wt.% of one or more rubbers with glass transition temperature <10°C as grafting base,
D) 0 to 1 part by weight of fluorinated polyolefin,
E) 0 to 20 parts by weight of at least one additive selected from the group comprising lubricants and mould release agents, nucleating agents, antistatic agents, stabilisers, phosphorus-free flame retardants or flame retardant synergists, fillers and reinforcing substances, dyes and pigments,
wherein component A) is a mixture of 95 to 70 wt.% of branched polycarbonate and/or polyester carbonate A.1) and 5 to 30 wt.% (in each case referred to component A)) of linear polycarbonate and/or polyester carbonate A2), and
wherein the sum of the parts by weight of the components A) to C) and optionally further additives D) and E) totals 100.

2. Compositions according to claim 1, containing 50 to 99 parts by weight of A) and 0.05 to 20 parts by weight of B) and C) .

3. Compositions according to claim 2, containing 60 to 95 parts by weight of A), 0.1 to 15 parts by weight of B) and 1 to 30 parts by weight of C).

4. Compositions according to one of the preceding claims
wherein X denotes

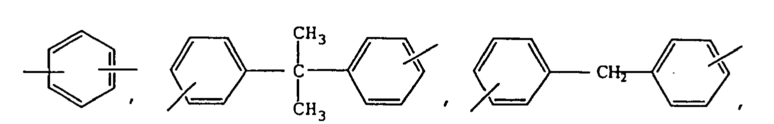

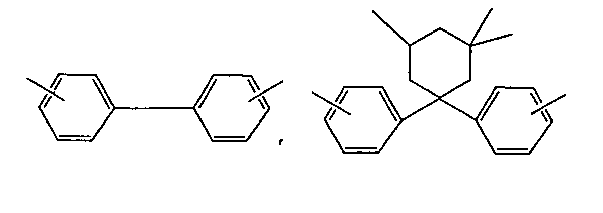

5. Compositions according to claim 4, wherein q is a number from 0.5 to 15.

6. Compositions according to claim 5, wherein q is a number from 0.8 to 5.

7. Compositions according to claim 1, wherein component B) is a phosphorus compound of the Formula (IVa) 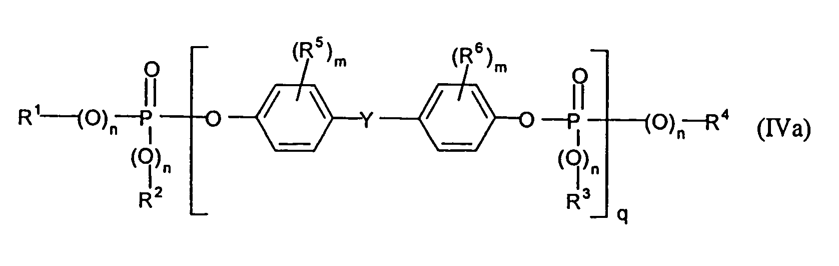 wherein
R¹, R² , R³, R⁴, n and q have the meanings given in claim 1,
m independently of one another is 0, 1, 2, 3 or 4,
R⁵ and R⁶ independently of one another denote C₁ to C₄ alkyl, and
Y denotes C₁-C₇ alkylidene, C₁-C₇ alkylene, C₅-C₁₂ cycloalkylene, C₅-C₁₂ cycloalkylidene, -O-, -S-, -SO₂- or -CO-.

8. Compositions according to claim 1, wherein the grafting base is a diene, EP(D)M, acrylate or silicone rubber or a composite rubber composed of two or more of these components.

9. Compositions according to claim 8, wherein the grafting base is selected from polybutadiene, butadiene/styrene copolymers and acrylate rubbers.

10. Use of the compositions according to one or more of the preceding claims for the production of moulded parts.

11. Moulded parts or moulded articles obtainable from compositions according to one or more of claims 1 to 9.

12. Extrusion profiled sections and extruded sheets obtainable from compositions according to one or more of claims 1 to 9.

## Revendications

1. Compositions constituées
A) de 50 à 99 parties en poids de polycarbonate et/ou de polyestercarbonate,
B) de 0,05 à 20 parties en poids d'au moins un composé du phosphore choisi parmi un ester d'acide phosphorique respectivement phosphonique de la formule (IV) 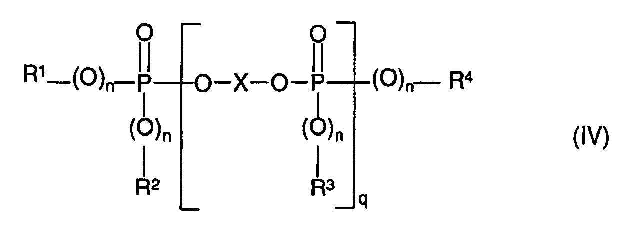 dans laquelle
R¹, R², R³ et R⁴ représentent indépendamment l'un de l'autre un groupe alkyle en C₁-C₈ éventuellement halogéné, un groupe cycloalkyle en C₅-C₆ aryle en C₆-C₂₀ ou un aralkyle en C₇-C₁₂ à chaque fois éventuellement substitué par un groupe alkyle et/ou un atome d'halogène,
n représente indépendamment 0 ou 1,
q est égal à de 0 à 30, et
X représente un reste aromatique mono- ou polycyclique avec de 6 à 30 atomes de C ou un reste aliphatique linéaire ou ramifié avec de 2 à 30 atomes de C, lequel peut être OH-substitué et peut contenir jusqu'à 8 liaisons éther ;
C) de 0,5 à 50 parties en poids de polymères greffés C1 et de (co)polymères de vinyle éventuellement thermoplastiques C2, lesquels sont présents dans les polymères greffés C1 sous forme dispersée,
les polymères greffés C1 étant un ou plusieurs polymères greffés de 5 à 95 % en poids d'un mélange constitué
1. de 50 à 99 % en poids de composés aromatiques vinyliques et/ou de composés aromatiques vinyliques substitués au noyau et
2. de 1 à 50 % en poids de cyanure de vinyle et/ou de dérivés comme des anhydrides et des imides d'acides carboxyliques insaturés sur
de 95 à 5 % en poids d'un ou plusieurs caoutchoucs avec des températures de transition vitreuse < 10°C comme base de greffage,
D) de 0 à 1 partie en poids de polyoléfine fluorée,
E) de 0 à 20 parties en poids d'au moins un additif choisi parmi des lubrifiants et des agents de démoulage, des agents de nucléation, des agents antistatiques, des stabilisateurs, des agents de protection aux flammes respectivement des synergistes de protection aux flammes exempts de phosphore, des charges et des matières de renforcement, des colorants et des pigments,
le constituant A) étant un mélange de 95 à 70 % en poids de polycarbonate et/ou de polyestercarbonate A.1) ramifié et de 5 à 30 % en poids (à chaque fois rapporté au constituant A)) de polycarbonate et/ou de polyestercarbonate A.2) linéaire et
la somme des parties en poids des constituants A) à C) et éventuellement des autres additifs D) et E) étant égale à 100.

2. Compositions selon la revendication 1 contenant de 50 à 99 parties en poids de A), de 0,05 à 20 parties en poids de B) C).

3. Compositions selon la revendication 2 contenant de 60 à 95 parties en poids de A), de 0,1 à 15 parties en poids de B) et de 1 à 30 parties en poids de C).

4. Compositions selon l'une quelconque des revendications précédentes, dans lesquelles X représente

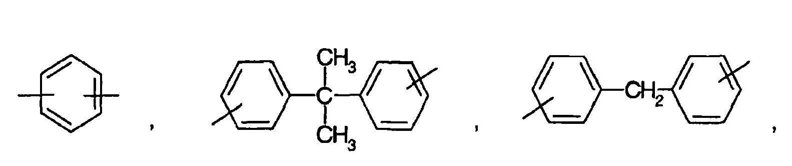

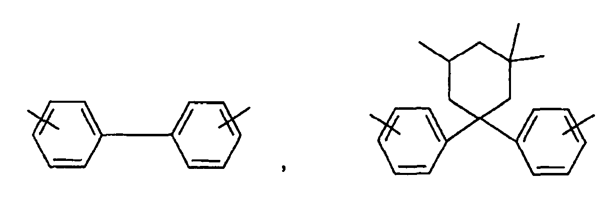

5. Compositions selon la revendication 4, dans lesquelles q représente un nombre de 0,5 à 15.

6. Compositions selon la revendication 5, dans lesquelles q représente un nombre de 0,8 à 5.

7. Compositions selon la revendication 1, dans lesquelles le constituant B) est un composé du phosphore de la formule (IVa) 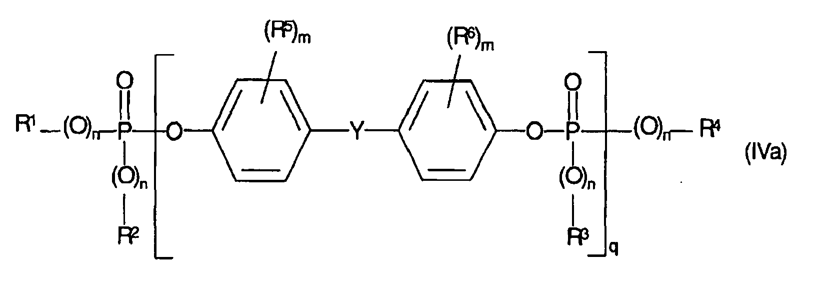 dans laquelle
R¹, R², R³, R⁴, n et q ont la signification indiquée dans la revendication 1,
m est indépendamment égal à 0, 1, 2, 3 ou 4,
R⁵ et R⁶ représentent indépendamment l'un de l'autre un groupe alkyle en C₁-C₄, et
Y représente un groupe alkylidène en C₁-C₇, alkylène en C₁-C₇, cycloalkylène en C₅-C₁₂, cycloalkylidène en C₅-C₁₂, -O-, -S-, -SO₂ ou -CO-,

8. Compositions selon la revendication 1, dans lesquelles la base de greffage est un caoutchouc de diène, d'EP(D)M, d'acrylate ou de silicium ou un caoutchouc composite constitué de deux ou plusieurs de ces constituants.

9. Compositions selon la revendication 8, dans lesquelles la base de greffage est choisie parmi le polybutadiène, des copolymères de butadiène/styrène et des caoutchoucs d'acrylate.

10. Utilisation des compositions selon l'une ou plusieurs des revendications précédentes pour la préparation de pièces moulées.

11. Pièces moulées ou corps moulés obtenus à partir de compositions selon l'une ou plusieurs des revendications 1 à 9.

12. Profils d'extrusion et plaques extrudées obtenus à partir des compositions selon l'une ou plusieurs des revendications 1 à 9.
